# EUROPÄISCHE PATENTSCHRIFT

(11) **EP 2 550 194 B1**
(45) Veröffentlichungstag und Bekanntmachung des Hinweises auf die Patenterteilung: **31.12.2014**
(21) Anmeldenummer: 11710466.1
(22) Anmeldetag: 21.03.2011
(51) Int. Cl.: F16C 27/06, B62D 5/04, F16H 25/24

(54) **SERVOLENKUNG**
SERVO STEERING SYSTEM
DIRECTION ASSISTÉE

(30) Priorität: 25.03.2010 DE 102010003233
(43) Veröffentlichungstag der Anmeldung: 30.01.2013
(73) Patentinhaber: ZF-Lenksysteme GmbH, 73527 Schwäbisch Gmünd (DE)
(72) Erfinder: RUPP, Arthur, 73460 Hüttlingen (DE); TRUTHMANN, Steffen, 39108 Magdeburg (DE)
(86) Internationale Anmeldenummer: PCT/EP2011/054188
(87) Internationale Veröffentlichungsnummer: WO 2011/117167

(56) Entgegenhaltungen:
- DE-A1-102006 037 479
- DE-A1-102008 041 872

## Beschreibung

Die Erfindung betrifft eine Servolenkung, insbesondere eine Hilfskraftlenkung für ein Fahrzeug, mit einer, von einem Servomotor angetriebenen Bewegungsschraube aus einer axial unverschieblich in einem Gestell gelagerten Mutter und einem axial verschiebbaren Bauteil, gemäß dem Oberbegriff des Patentanspruches 1.

Servolenkungen, insbesondere elektrische Hilfskraftlenkungen bei Personenkraftwagen, deren Servomotor Drehzahl und Drehmoment über ein Zugmittelgetriebe auf eine Mutter, insbesondere eine Kugelumlaufmutter überträgt, sind aus dem Stand der Technik bekannt. Dabei ist ein Servomotor und die von der Mutter angetriebene Zahntange oder deren Spindelabschnitt häufig achsparallel angeordnet.

So beschreibt die DE 103 10 492 A1 eine elektrische Servolenkung wobei ein Elektromotor ein axial verschiebbar in einem Lenkgetriebegehäuse gelagertes Bauteil antreibt. Das Bauteil ist als Zahnstange gebildet und ein Kugelgewinde des Bauteiles ist in Eingriff mit einem Muttergewinde einer axial unverschieblich in dem als Lenkgetriebegehäuse gebildeten Gestell gelagert. Die Mutter ist mit einem Riemenrad eines Zugmittelgetriebes zwischen dem Servomotor und der so gebildeten Bewegungsschraube drehfest verbunden. Die Mutter ist über ein Radial-Festlager, ein Wälzlager, an dem Lenkgetriebegehäuse abgestützt und gelagert. Das Radiallager ist häufig als Vierpunktlager gebildet, da insbesondere auch Axialkräfte aufzunehmen sind. Ein Innenring des Wälzlagers stützt sich dabei axial an den auf der Mutter montierten Bauteilen, wie etwa dem Riemenrad und an einem Anschlag in Form eines Ringes oder Sprengringes ab. Das Radiallager ist dabei häufig durch Lagerscheiben axial gegenüber den Komponenten der Servolenkung abgegrenzt, wobei die Funktion der Lagerscheiben auch teilweise durch andere Komponenten der Servolenkung übernommen wird. Oft ist damit die Aufbringung eines Kippmomentes auf den Aussenring des Radiallagers verbunden. Zudem sind die Lagerscheiben aus gut schallleitendem Material und liegen häufig direkt an einem Gehäuse der Servolenkung an, sodaß Schall direkt an die Umgebung der Servolenkung abgestrahlt werden kann.

Die DE 103 10 492 A1 beschreibt eine elektrische Hilfskraftlenkung mit einer, von einem Servomotor angetriebenen Bewegungsschraube aus einer axial unverschieblich in einem Gestell gelagerten Mutter und einem axial verschiebbaren Bauteil, dessen Gewinde mit einem Muttergewinde der Mutter in Eingriff ist, wobei die Mutter mit einem Wälzlager in dem als Lenkgetriebegehäuse gebildeten Gestell gelagert ist. Ein Aussenring des Wälzlagers stützt sich direkt an einem Getriebedeckel der Servolenkung ab.

Des Weiteren offenbart DE 102 006 037 479 A1 die Préambel des Anspruchs 1.

Der Erfindung liegt, ausgehend von diesem Stand der Technik, die Aufgabe zugrunde, eine Servolenkung anzugeben, die eine optimierte Kraftleitung in ihrem Kugelgewindetrieb aufweist und deren Betriebsgeräusch minimiert ist.

Die Aufgabe wird mit einer Servolenkung mit den Merkmalen des Patentanspruches 1 gelöst.

Dadurch dass vorzugsweise zu beiden Seiten des Wälzlagers an einem Aussenring zumindest je eine Lagerscheibe vorgesehen ist, deren von dem Aussenring abgewandten Seite im Radialbereich des Aussenrings mit einem Ring aus elastomerem Material versehen ist, wobei der Ring im nicht montierten Zustand des Wälzlagers in axialer Richtung über die Aussenfläche der jeweiligen Lagerscheibe hervorragt und von der Lagerscheibe und dem Aussenring wegragt, ist eine konstruktive Maßnahme getroffen, zum einen den Kraftfluß durch das Wälzlager, insbesondere durch den Aussenring linear zu gestalten und Kippmomente zu vermeiden, da der Ring aus elastomerem Material in dem Radialbereich des Aussenringes jeweils liegt und zur Krafteinleitung von dem Lenkgetriebegehäuse oder Gestell in den Aussenring und wieder in das Gestell dient. Zudem stützt sich das Wälzlager dadurch im montierten Zustand an einem vorgespannten Elastomer ab und nicht an einer Lagerscheibe beispielsweise aus Metall, sodaß insbesondere eine Schallleitung aus dem Inneren des Lenkgetriebes über den Aussenring des Wälzlagers verhindert ist. Anstatt des Ringes aus elastomerem Material können auch Einzelsegmente aus elastomerem Material vorgesehen sein, die in Ringform angeordnet sind.

Bevorzuge Ausführungen ergeben sich aus den Unteransprüchen.

In einem besonders bevorzugten Ausführungsbeispiel der Servolenkung ist der Ring aus elastomerem Material U-förmig von der Aussenfläche der jeweiligen Lagerscheibe abragend und kann entlang seiner Längsachse komprimiert werden.

Der Ring kann aus einem Gummimaterial oder aus einem anderen synthetischen Elastomer gebildet sein, der resistent gegen die Betriebsstoffe in dessen Umgebung ist. Im montierten Zustand der Servolenkung ist jeder Ring axial gestaucht, sodaß das Wälzlager "hydraulisch" aufgehängt in dem Gestell oder Lenkgetriebegehäuse angeordnet ist.

Der Ring aus einem elastomeren Material kann bevorzugt auf jede Lagerscheibe aufvulkanisiert sein. Die Lagerscheiben oder zumindest eine Lagerscheibe an dem Wälzlager kann aus einem Metall-Werkstoff, beispielsweise aus Stahl gebildet sein oder aus einem technischen Kunststoff oder Hochleistungskunststoff gebildet sein. Für die Herstellung der Lagerscheiben empfiehlt sich die Anwendung von technischen Kunststoffen, wie Polyamid, Polyoxymethylen oder Polyethylenterephtalat. Polyamide (PA) sind die wichtigsten technischen Kunststoffe deren Grundbaustein durch Carbonsäureamidgruppen miteinander verknüpft sind. Man unterscheidet zwei Gruppen von Polyamiden: Polyamid -6-Typ, dessen Grundstoff durch Polykondensation von ω - Aminocarbonsäuren oder Polymerisaten ihrer Lactame entstehen.

Polyamid 66-Typ, dessen Grundstoff durch Polykondensation von Diaminen und Dicarbonsäuren entstanden ist. Unterschiede zwischen den verschiedenen Polyamiden werden durch unterschiedliche Kristallinität, das Verhältnis von CH₂-/CONH - Gruppen in den Polymeren, gerad- oder ungeradzahliger C-Atomzahl und dem Abstand benachbarter Makromoleküle und damit durch den Kristallinitätsgrad hervorgerufen. Polyamide können in ihren Eigenschaften, wie Biegefestigkeit, Oberflächenhärte etc. durch Additive wie Glasfasern, Glaskugeln, Mineralpulver, Kohlenstoff-Fasern oder auch Graphit und Molybdänsulfid stark beeinflußt werden. Teilkristalline Polyamide besitzen hohe bis mittlere Festigkeit und mittlere Steifigkeit, geringe Härte, gute bis ausgezeichnete Schlagzähigkeit sowie gute Gleit- und Verschleißeigenschaften. Polyoxymethylen (POM) besitzt mittlere bis hohe Festigkeit (Wechselfestigkeit) und Steifigkeit und eignet sich für die Herstellung eng tolerierter Bauteile wie Zahnräder und dergleichen. Polyethylenterephtalat (PET) weist eine hohe Steifigkeit und Härte und hohe Abriebfestigkeit auf. Zudem eine geringe Wärmedehnung und eignet sich gut für die Herstellung von Lagerscheiben.

Hochleistungskunststoffe wie Polyaryletherketone, wie Polyetheretherketon oder Polyetherketon, weisen eine hohe mechanische Wechselfestigkeit und gutes Gleit-und Verschleißverhalten auf. Sie behalten ihre guten Festigkeitseigenschaften bis zu Temperaturen von über 250 °C bei.

Kunststoff eignet sich auch dementsprechend gut um einen gekröpften Querschnitt der Lagerscheiben darzustellen in dem Sinne, dass die Lagerscheiben von ihrem Zentrum zu ihrem radialen Rand jeweils auf den Aussenring zugeformt sind. Dadurch ergibt sich in axialer Richtung Bauraum, der für die Anordnung des Ringes aus elastomerem Material genutzt werden kann. Die Gesamtdicke des Lagerringes wird durch die Kröpfung geringer als ohne Kröpfung.

Die Servolenkung ist bevorzugt als elektrische Servolenkung mit achsparalleler Anordnung von Servomotor und Zahnstange gebildet.

### Bezugszeichenliste

- 1: Servolenkung
- 2: Bewegungsschraube
- 3: Gestell
- 4: Mutter
- 5: Bauteil, axial verschiebbar
- 6: Gewinde
- 7: Muttergewinde
- 8: Wälzlager
- 9: Aussenring
- 10: Lagerscheibe
- 11: Seite
- 12: Radialbereich
- 13: Ring
- 14: Aussenfläche
- 15: Hilfskraftlenkung, elektrisch
- 16: Lenkgetriebegehäuse
- 17: Zahnstange
- 18: Spindelabschnitt
- 19: Kugelgewinde
- 20: Riemenrad
- 21: Innenring
- 22: Stirnfläche
- 23: Axialanschlag
- 24: Stirnfläche
- 25: Ebene

- d: Dicke, v. 13
- X: Montagerichtung
- d₁: Aussendurchmesser
- d₂: Aussendurchmesser
- d₃: Aussendurchmesser

Die Erfindung wird nun näher anhand eines Ausführungsbeispiels beschrieben und anhand der beiliegenden Zeichnung wiedergegeben.

In der Zeichnung zeigt:
- Fig. 1: einen teilweisen schematischen Längsschnitt durch eine erfindungsgemäße Servolenkung,
- Fig. 2: eine Einzelheit I in Fig. 1.

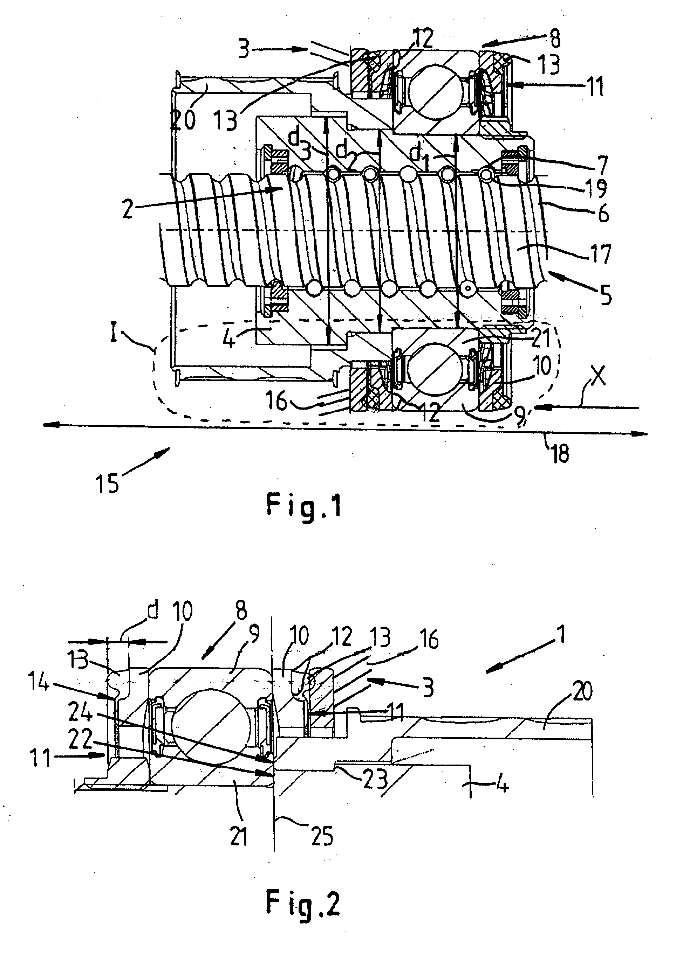

In Fig. 1 ist in einem teilweisen Längsschnitt eine als elektrische Zahnstangen-Hilfskraftlenkung 15 gebildete Servolenkung 1 für einen Personenkraftwagen oder einen Nutzkraftwagen gezeigt. In einem als zylinderförmigen Lenkgetriebegehäuse 16 gebildeten Gestell 3 ist ein als Zahnstange 17 gebildetes, axial verschiebbares Bauteil 5 gelagert. Parallel zu der Zahnstange 17 ist an einem Radialflansch des Lenkgetriebegehäuses 16 ein nicht gezeigter elektrischer Servomotor festgelegt. Die Zahnstange 17 kämmt an einem nicht gezeigten Verzahnungsabschnitt mit einem nicht gezeigten Ritzel an einer Lenkwelle und weist an einem Spindelabschnitt 18 ein als Kugelgewinde 19 gebildetes Gewinde 6 auf, welches in Eingriff mit einem als Kugelumlaufgewinde gebildeten Muttergewinde 7 einer Mutter 4 ist. Die Mutter 4 und der Spindelabschnitt 18 bilden eine Bewegungsschraube 2. Die Mutter 4 ist drehfest mit einem als Zahnscheibe (vgl. Fig. 2) gebildeten Riemenrad 20 verbunden und über ein als Radiallager gebildetes Wälzlager 8 in einem nicht gezeigten Gehäusedeckel des Lenkgetriebegehäuses 16 gehalten. Das Wälzlager 8 ist als Festlager gebildet und vermag axiale und radiale Kräfte von der Mutter 4 auf das Gestell 3 zu übertragen.

Die Mutter 4 weist an ihrem Aussenumfang, wie dies auch in einer Einzelheit I in Fig. 2 gezeigt ist, zwei Durchmessersprünge auf, zwischen denen die Kontur der Mutter 4 zylinderartig ist. Von ihrer Aussenumfangsseite betrachtet, bildet die Mutter 4 einen Stufenzylinder. Im Radialbereich des Wälzlager 8 ist der Aussendurchmesser d₁ der Mutter 4 am kleinsten. Er entspricht dem Innendurchmesser eines Innenringes 21 des Wälzlagers 8. Der Innenring 21 ist von einer Montagerichtung X in Betrachtungsrichtung der Figuren 1 und 2 von rechts nach links auf die Mutter 4 geschoben und liegt an einer Stirnfläche 22 des, einen Anschlag bildenden ersten Durchmessersprunges an. In dem Bereich des Anschlages hat die Mutter 4 einen Aussendurchmesser d₂, der dem ersten Aussendurchmesser d₁ zuzüglich etwa der Hälfte der Dicke des Innenringes 21 entspricht (vgl. Fig. 2). In Betrachtungsrichtung weiter links ist an der Aussenumfangsfläche der Mutter 4 ein weiterer Durchmessersprung zu einem größeren Durchmesser d₃ vorgesehen, wobei die Durchmesserzunahme von d₂ zu d₃ etwa halb so groß wie die Durchmesserzunahme von d₁ zu d₂ ist. Der zweite Durchmessersprung von einem Außendurchmesser d₂ zu d₃ dient als Axialanschlag 23 für das Riemenrad 20, das dadurch so auf der Mutter 4 zu liegen kommt, dass seine Stirnfläche 24 in einer Ebene 25 mit der Stirnfläche 22 der Mutter 4 am ersten Durchmessersprung zu liegen kommt.

Auf diese Weise kann zunächst bei der Montage das Riemenrades 20 in Montagerichtung X auf die Mutter 4 geschoben werden und anschließend in derselben Montagerichtung X das Wälzlager 8 bis zum Anschlag des Innenringes 21 an der Stirnfläche 22 oder Anschlag der Mutter 4 und gleichzeitig an der Stirnfläche 24 oder Anschlag an dem Riemenrad 20.

Durch axial zu beiden Seiten des Wälzlagers 9 angeordnete Lagerscheiben 10 wird das Wälzlager 8 auf der Mutter 4 fixiert. Die Lagerscheiben 10 sind, wie Fig. 2 in einem Detail I in Fig. 1 zeigt, mit einem gekröpften Querschnittsverlauf dahingehend versehen, dass sie radial ausgehend von der Mutter 4 sich zu dem Aussenring 9 neigen. Die Lagerscheiben 10 sind auf ihrer, dem Aussenring 9 axial abgewandten Seite 11 im Radialbereich 12 des Aussenringes 9 mit einem um ihren Umfang aufvulkanisierten Ring 13 aus einem Gummimaterial versehen. Der Ring 13 weist einen in axialer Richtung gerichteten u-förmigen Querschnitt auf, sodaß er in der Art einer Nase von der jeweiligen Lagerscheibe 10 jeweils von dem Wälzlager-Aussenring 9 wegragt. Die gesamte Aussenfläche 14 einer jeden Lagerscheibe 10 ist mit dem elastomeren Material des Ringes 13 überzogen, wobei im radial inneren Bereich, vor der Kröpfung der jeweiligen Lagerscheibe 10 die Materialdicke der elastomeren Schicht sehr gering ist im Vergleich zu der Dicke d des Ringes 13. Die Lagerscheiben 10 stützen sich an dem Aussenring 9 ab, während auf ihrer gegenüberliegenden Seite jeweils der Ring 13 aus elastomerem Material als Anlage für das Wälzlager an dem Lenkgetriebegehäuse 16 oder dessen Deckel dient. Der Ring 13 wird im montierten Zustand dabei etwa um die Hälfte seiner Dicke d gestaucht, sodaß sich eine Art "hydraulischer" Einbau des Wälzlagers mit einer geraden Kraftflussmöglichkeit von der jeweiligen Anlage an dem Lenkgetriebegehäuse 16 über den jeweiligen Ring 13 durch den Aussenring 9 des Wälzlagers 8 ergibt.

Das Wälzlager 8 ist dadurch frei von Kippmomenten und zudem in Bezug auf Schallleitung von Betriebsgeräuschen des Kugelmutter-Spindeltriebes auf das Lenkgetriebegehäuse gut isoliert aufgehängt.

## Patentansprüche

1. Servolenkung, insbesondere Hilfskraftlenkung für ein Fahrzeug, mit einer, von einem Servomotor angetriebenen Bewegungsschraube (2) aus einer axial unverschieblich in einem Gestell (3) gelagerten Mutter (4) und einem axial verschiebbaren Bauteil (5) dessen Gewinde (6) mit einem Muttergewinde (7) der Mutter (4) in Eingriff ist, wobei die Mutter (4) mit einem Wälzlager (8) in dem Gestell (3) gelagert ist, **dadurch gekennzeichnet, dass** zumindest an einer Seite des Wälzlagers (8) an einem Aussenring (9) eine Lagerscheibe (10) vorgesehen ist, deren von dem Aussenring (9) abgewandte Seite (11) im Radialbereich (12) des Aussenrings (9) mit einem Ring (13) oder ringförmigen Bauteil aus elastomerem Material versehen ist, wobei der Ring (13) im nicht montierten Zustand des Wälzlagers (8) in axialer Richtung über die Aussenfläche (14) der jeweiligen Lagerscheibe (10) hervorragt.

2. Servolenkung nach Anspruch 1, **dadurch gekennzeichnet, daß** der Ring (13) im Querschnitt U - förmig von der Aussenfläche (14) der jeweiligen Lagerscheibe (10) abragt.

3. Servolenkung nach Anspruch 1 oder 2, **dadurch gekennzeichnet, daß** der Ring (13) aus einem Gummimaterial besteht.

4. Servolenkung nach einem der Ansprüche 1 bis 3, **dadurch gekennzeichnet, dass** der Ring (13) jeweils im montierten Zustand der Servolenkung (1) in axialer Richtung gestaucht ist.

5. Servolenkung nach einem der Ansprüche 1 bis 4, **dadurch gekennzeichnet, daß** zu jeder Seite des Wälzlagers (8) ein Ring (13) vorgesehen ist, der jeweils auf jede Lagerscheibe (10) aufvulkanisiert ist.

6. Servolenkung nach einem der Ansprüche 1 bis 5, **dadurch gekennzeichnet, dass** jede Lagerscheibe (10) aus einem Metall-Werkstoff oder aus einem Kunststoff gebildet ist.

7. Servolenkung nach einem der Ansprüche 1 bis 6, **dadurch gekennzeichnet, daß** der Querschnitt jeder Lagerscheibe (10) einen gekröpften Verlauf hin zu dem Aussenring (9) aufweist.

8. Servolenkung nach einem der Ansprüche 1 bis 7, **dadurch gekennzeichnet, daß** die Servolenkung (1) eine elektrische Hilfskraftlenkung (15) mit achsparalleler Anordnung von axial verschiebbarem Bauteil (5) und Servomotor ist.

## Claims

1. Power steering system, in particular power assistance steering system for a vehicle, having a movement screw (2) which is driven by a servomotor and comprises a nut (4) which is mounted axially non-displaceably in a frame (3) and an axially displaceable component (5), the thread (6) of which is in engagement with a nut thread (7) of the nut (4), the nut (4) being mounted by way of an anti-friction bearing (8) in the frame (3), **characterized in that** a bearing plate (10) is provided on an outer ring (9) at least on one side of the anti-friction bearing (8), that side (11) of which bearing plate (10) which faces away from the outer ring (9) is provided in the radial region (12) of the outer ring (9) with a ring (13) or annular component made from elastomeric material, the ring (13) protruding in the axial direction beyond the outer face (14) of the respective bearing plate (10) in the non-mounted state of the anti-friction bearing (8).

2. Power steering system according to Claim 1, **characterized in that** the ring (13) protrudes from the outer face (14) of the respective bearing plate (10) in a U-shaped manner in cross section.

3. Power steering system according to Claim 1 or 2, **characterized in that** the ring (13) is composed of a rubber material.

4. Power steering system according to one of Claims 1 to 3, **characterized in that** the ring (13) is compressed in the axial direction in each case in the mounted state of the power steering system (1).

5. Power steering system according to one of Claims 1 to 4, **characterized in that** a ring (13) which is vulcanized in each case onto each bearing plate (10) is provided on each side of the anti-friction bearing (8).

6. Power steering system according to one of Claims 1 to 5, **characterized in that** each bearing plate (10) is formed from a metal material or from a plastic.

7. Power steering system according to one of Claims 1 to 6, **characterized in that** the cross section of each bearing plate (10) has a bent-over profile towards the outer ring (9).

8. Power steering system according to one of Claims 1 to 7, **characterized in that** the power steering system (1) is an electric power assistance steering system (15) with an axially parallel arrangement of the axially displaceable component (5) and the servomotor.

## Revendications

1. Servodirection, en particulier direction assistée pour un véhicule, comprenant une vis de déplacement (2) entraînée par un servomoteur, constituée d'un écrou (4) monté de manière axialement immobile dans un bâti (3) et d'un composant déplaçable axialement (5) dont le filetage (6) est en prise avec un filetage d'écrou (7) de l'écrou (4), l'écrou (4) étant supporté dans le bâti (3) avec un palier à roulement (8), **caractérisée en ce qu'**au moins d'un côté du palier à roulement (8) au niveau d'une bague extérieure (9) est prévu un disque de palier (10) dont le côté (11) opposé à la bague extérieure (9) est pourvu, dans la région radiale (12) de la bague extérieure (9), d'une bague (13) ou d'un composant en forme de bague en matériau élastomère, la bague (13), dans l'état non monté du palier à roulement (8), faisant saillie dans la direction axiale au-delà de la face extérieure (14) du disque de palier respectif (10).

2. Servodirection selon la revendication 1, **caractérisée en ce que** la bague (13) dépasse en coupe transversale en forme de U depuis la face extérieure (14) du disque de palier respectif (10).

3. Servodirection selon la revendication 1 ou 2, **caractérisée en ce que** la bague (13) se compose d'un matériau en caoutchouc.

4. Servodirection selon l'une quelconque des revendications 1 à 3, **caractérisée en ce que** la bague (13) est à chaque fois comprimée dans la direction axiale dans l'état monté de la servodirection (1).

5. Servodirection selon l'une quelconque des revendications 1 à 4, **caractérisée en ce que** de chaque côté du palier à roulement (8) est prévue une bague (13) qui est appliquée par vulcanisation à chaque fois sur chaque disque de palier (10).

6. Servodirection selon l'une quelconque des revendications 1 à 5, **caractérisée en ce que** chaque disque de palier (10) se compose d'un matériau métallique ou d'un plastique.

7. Servodirection selon l'une quelconque des revendications 1 à 6, **caractérisée en ce que** la section transversale de chaque disque de palier (10) présente une allure courbée en direction de la bague extérieure (9).

8. Servodirection selon l'une quelconque des revendications 1 à 7, **caractérisée en ce que** la servodirection (1) est une direction assistée électrique (15) avec un agencement à axes parallèles du composant déplaçable axialement (5) et du servomoteur.
